# EUROPÄISCHE PATENTANMELDUNG

(11) **EP 0 830 907 A2**
(43) Veröffentlichungstag der Anmeldung: **25.03.1998**
(21) Anmeldenummer: 97116404.1
(22) Anmeldetag: 19.09.1997
(51) Int. Cl.: B21D 26/08

(54) **Verschlussvorrichtung für eine Einrichtung zum Expansionsformen**

(30) Priorität: 20.09.1996 DE 19638688; 20.09.1996 DE 19638605; 20.09.1996 DE 19638679
(71) Anmelder: Schmalbach-Lubeca AG, 40880 Ratingen (DE)
(72) Erfinder: van Dam, Pim, 8162 XL Epe (NL)
(74) Vertreter: Olgemöller, Luitgard, Dr.

(57) **Zusammenfassung**

Die Erfindung beschreibt eine Verschlußvorrichtung für eine Einrichtung zum Formen von Hohlkörpern durch Verformen der Seitenwände und/oder des Bodens mittels sprunghaften Druckanstieges im Innenraum des Hohlkörpers, umfassend einen mit mindestens einer Gas-Zuführungsleitung und ggf. einer Zündeinrichtung versehenen Stopfen (5) zum dichtenden Verschließen des Innenraums des Hohlkörpers während des Formvorgangs, dessen zum Innenraum des Hohlkörpers gewandte Seite eine ringförmige Verlängerung (14) aufweist, die mindestens so weit in diesen hineinragt, daß ein bedeutender Teil der Wandung des Hohlkörpers vom Explosionsort abgeschirmt ist.

## Beschreibung

Die vorliegende Erfindung liegt auf dem Gebiet der Verformung von Hohlkörpern wie Dosen oder Rohren durch sprunghaften Druckanstieg im Inneren des Hohlkörpers ("Expansionsformen").

Es ist bekannt, zylindrische Dosenkörper oder dergleichen durch sog. Explosionsformen oder Expansionsformen in eine zylindrische oder mit Wölbungen versehene Form zu überführen. Dabei kann der sprunghafte Druckanstieg, der im Inneren des zu verformenden Hohlkörpers aufgebracht werden muß, entweder direkt an Ort und Stelle durch Zünden eines explosiven Gemisches erzeugt werden (siehe beispielsweise WO95/08410). Alternativ kann z.B. eine Explosion in einer getrennten Kammer erfolgen, wobei Ventile vorgesehen sind, die auf den plötzlichen Druckanstieg in der getrennten Kammer reagieren und daraufhin Öffnungen zum Innenraum des zu verformenden Hohlkörpers freigeben (siehe beispielsweise Patentveröffentlichung FR 2 206 988 oder Patentbeschreibung GB 1 532 812). Die den Hohlkörper verformenden Schockwellen können prinzipiell in Gasen oder in Flüssigkeiten erzeugt werden.

Wenn die Explosion im Gasraum des zu verformenden Hohlkörper erfolgen soll, muß dieser in ein Werkzeug eingelegt werden, welches in seiner lichten Ausdehnung die gewünschten veränderten Abmessungen aufweist. Die obere Öffnung des Hohlkörpers muß dichtend gegenüber der Umgebung verschlossen sein, wobei der Verschluß die notwendigen Einrichtungen für die Gaszufuhr und die Zündung des Gasgemisches trägt. Dabei ist gemäß dem Vorschlag der bereits oben erwähnten WO95/08410 vorgesehen, daß die Teile der den Hohlkörper umschließenden Form über einen Bajonettverschluß mit dem die Verschlußplatte tragenden Teil der Vorrichtung verbunden sind.

Das zur Explosion zu bringende Gas ist üblicherweise ein Gasgemisch aus einem Verbrennungsgas und Sauerstoff, ggf. in Kombination mit einem verdünnenden Gas. Für jedes dieser Gase ist eine Zuführungsleitung vorgesehen; die Mischung erfolgt innerhalb des zu verformenden Hohlkörpers. An der Verschlußplatte, die den zu verformenden Hohlkörper gegen die Umgebung abdichtet, ist eine Zündkerze angeordnet, die das eingeströmte Gas, das nun als explosives Gasgemisch vorliegt, zur Zündung bringt. Auf die Zündung hin breitet sich die Schockwelle der Explosion kugelschalenförmig vom Explosionsort aus. Das bedeutet, daß die Druckwelle unkontrolliert auf die Wandung des zu verformenden Hohlkörpers auftrifft. Falls der Hohlkörper relativ groß ist, ist eine große Menge an Verbrennungsgas erforderlich.

Aufgabe der vorliegenden Erfindung ist es, in einem solchen Verfahren die erforderliche Menge an einzuführendem Gas zu reduzieren und die Druckwelle bei der Explosion gezielt zu führen.

Die Aufgabe wird durch die Bereitstellung einer Vorrichtung gemäß Anspruch 1 gelöst.

Unter "Hohlkörper" sollen dabei vor allem Körper mit nur einer Öffnung zu verstehen sein, beispielsweise Behältnisse wie ein- oder zweiteilige Dosenkörper, Tuben oder Flaschen.

Durch die ringförmige Verlängerung des Stopfens entsteht ein zylindrischer oder konischer, nach unten offener Hohlraum innerhalb des Stopfens. In diesen Hohlraum hinein ragen die Zuführungsleitung(en) für das Gas sowie ggf. die Zündvorrichtung. Beim Zünden wandert nun die Druckwelle den innerhalb des Stopfens befindlichen zylindrischen oder konischen Hohlraum hinunter bis zum Ende des Stopfens, der sich in einer bevorzugten Ausführungsform nicht sehr weit vom Boden des Hohlkörpers befindet. Dort breitet sie sich in Richtung Boden und unterer Seitenwand des Hohlkörpers aus und wandert dann kontrolliert an der Seitenwand des Hohlkörpers entlang wieder nach oben, wobei die gewünschte Verformung bewirkt wird. Die direkte Einwirkung des "fast burn" auf die Wände des Hohlraumes wird dadurch vermieden.

Durch die ringförmige Verlängerung des Stopfens wird ferner das Volumen des Innenraums des Hohlkörpers verringert. Daher muß weniger Gas zugeführt werden.

Die Länge des Stopfens bzw. der Verlängerung des Stopfens ist im Prinzip frei wählbar. Jedoch sollte klar sein, daß die Vorteile der Erfindung umso stärker zum Tragen kommen, je mehr von der Wandung des Hohlkörpers abgeschirmt ist und je mehr Volumen durch den Stopfen im Inneren des Hohlkörpers verdrängt wird. Gute Ergebnisse erhält man beispielsweise, wenn sich die Verlängerung über etwa 3/5 bis 5/6 oder ggf. auch 9/10 der Länge zwischen Boden und Halsbereich des Hohlkörpers erstreckt.

Neben der Länge der "Lanze" des Stopfens, also der ringförmigen Verlängerung, wird die Dicke des Ringsegmentes sowie dessen Form in Abhängigkeit von der Größe der Dose, den gewünschten Druckverhältnissen und dergleichen abhängig gewählt. In einer Ausgestaltung der Erfindung besitzt der Stopfen selbst im Dichtungsbereich eine konische Form. Deren Neigungswinkel kann auch im verlängerten Bereich des Stopfens beibehalten werden. Der Stopfen kann nach unten hin jedoch auch eine andere, ggf. geringere Neigung (bezogen auf die Senkrechte) aufweisen oder zylindrisch sein, unabhängig von seiner Ausgestaltung im Öffnungsbereich des Hohlkörpers. Bevorzugt ist eine konische Form im Dichtungsbereich, die sich etwas (z.B. einige Zentimeter) ins Innere des Hohlkörpers nach unten hin fortsetzt, während der zum Hohlkörperboden hin gerichtete Teil der ringförmigen Verlängerung eine zylindrische Wandform aufweist. Die im Inneren des Stopfens befindliche Ausnehmung wird dagegen in bequemer Weise bevorzugt zylindrisch gewählt, so daß sich je nach gewählter Außenform ein nach unten verjüngender Ring oder ein seiner Dicke gleichbleibender Ring ergibt. Bevorzugt reicht der Ring soweit in den Hohlkörper hinein, daß er sich bis auf 1 bis 2 cm dem Boden des Hohlkörpers nähert, z.B. bei Getränkedosen.

In der bereits oben erwähnten Ausgestaltung, in der der Stopfen im Dichtbereich, also im Öffnungsbereich des Hohlkörpers, eine konische Form aufweist, beträgt der Neigungswinkel des Konus im allgemeinen etwa 2° bis 10°, bevorzugt 3° bis 6°, ganz besonders bevorzugt etwa 4,5° bis 5° gegenüber der Senkrechten.

Der Stopfen selbst besitzt dabei bevorzugt eine sehr einfache Gestalt, z.B. im wesentlichen die Form eines Kegelstumpfes. Er ist in vorteilhafter Weise einstückig gearbeitet, wobei die Zuführungsleitung(en) in zweckmäßiger Weise durch (eine) Bohrung(en) im Stopfen geführt wird/werden. Auch die Zündeinrichtung wird ggf. durch den Stopfen zu dessen Außenseite geführt.

An der nach außen weisenden Seite des Stopfens sind üblicherweise Mittel vorgesehen, mit denen er während der Explosion oder Expansion gehalten wird (Feststellvorrichtung).

Der bevorzugt gewählte Neigungswinkel des Konus im Bereich von 3° bis 6° bewirkt eine ausgezeichnete Schließkraft zwischen Stopfen und der Öffnung des zu verformenden Hohlkörpers. Ganz besonders bevorzugt beträgt der Neigungswinkel des konischen Stopfens etwa 4,5 bis 5°. Eine weitere Abdichtung, etwa über O-Ringe oder weitere Dichtflächen des Stopfens mit Teilen der den Hohlkörper umgebenden Form, ist deshalb in einer derartigen Ausgestaltung nicht erforderlich. Dies ist besonders im Hinblick auf das Lösen des Verschlusses nach dem Verformen günstig, weil hierbei die Reibkräfte nicht zu hoch sind.

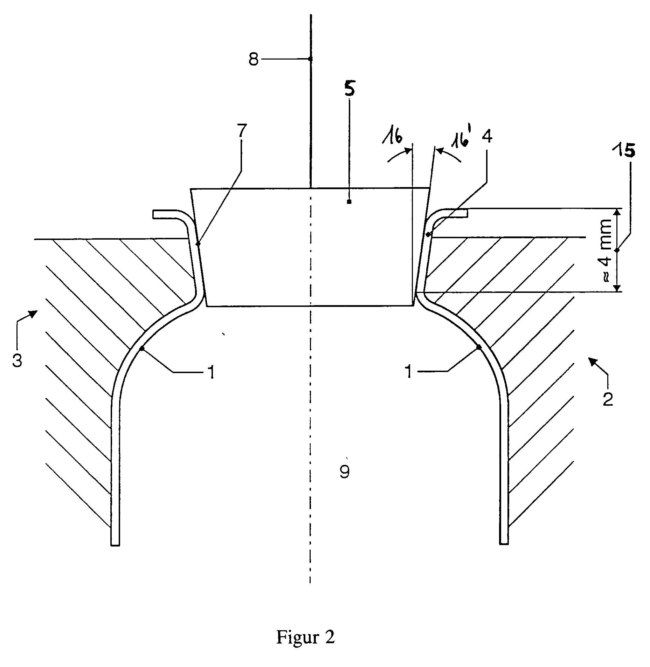

Wenn es sich bei dem zu verformenden Hohlkörper um einen Dosenkörper handelt, so ist dessen oberer Rand üblicherweise bereits in die Vorform eines Rumpfhakens gebogen. Hierdurch weist der Halsbereich einen gewölbten Bereich, ggf. auch mit einem konischen Abschnitt, auf, so daß der dichtende Abschnitt relativ lang ist (die funktionelle Eintauchtiefe beträgt bevorzugt ca. 3 bis 6, besonders bevorzugt etwa 4 mm, siehe Figur 2).

Der gewählte Konus-Winkel des Stopfens eignet sich jedoch insgesamt für eine Vielzahl von Behälterkörpern, unabhängig davon, ob sie einen zylindrischen oder gewölbten Haisbereich besitzen und unabhängig davon, ob der Hals bzw. die Öffnung gegenüber dem übrigen Behälterkörper eingezogen ist.

Überraschenderweise hat sich gezeigt, daß der Einsatz des konischen Stopfens bei Dosen mit einem eingezogenen, gebogenen Halsabschnitt wie beispielsweise Getränkedosen eine leichte Verformung des Halses bewirkt, was eine verbesserte Deckel-zur-Dose-Passung und damit eine bessere Falzdichtung zur Folge hat.

In einer speziellen Ausgestaltung kann der wie vorstehend beschriebene konische Stopfen auch ohne die ringförmige Verlängerung eingesetzt werden. Folgende Vorteile ergeben sich:

Die Verschlußplatte im Stand der Technik gemäß der oben erwähnten WO 95/08410 wird durch einen O-Ring gegen den Hals des Hohlkörpers abgedichtet, der in einer Ausnehmung der Platte angeordnet ist. Um einen vorzeitigen Verschleiß des O-Rings zu vermeiden, ist hinter dem O-Ring eine ebenfalls ringförmige Luftkammer vorgesehen, die mit einer Vakuumeinrichtung sowie mit einer Luftzufuhr verbunden ist. Zum Verschließen wird die Verschlußplatte in die Öffnung des Hohlkörpers eingebracht, während gleichzeitig in der Luftkammer ein Vakuum erzeugt wird. Dabei wird der O-Ring nach innen eingezogen. Wenn die Abschlußplatte ihre Endstellung erreicht hat, wird diese Kammer wieder mit Luft befüllt, so daß sich der O-Ring wieder in seine ursprüngliche Position begibt und sich dabei dichtend an den Hals des Hohlkörpers anlegt. Anschließend kann die Kammer mit Verbrennungsgas gefüllt und dieses gezündet werden.

Das mit einer derartigen Vorrichtung ausführbare Verformungsverfahren ist langwierig und umständlich, da das Verschließen der Öffnung wie oben detailliert dargelegt mit einer Vielzahl von Arbeitsgängen verbunden ist.

Da der vorliegend beschriebene Stopfen technisch einfach gestaltet ist, wird der Verschließvorgang vereinfacht und abgekürzt.

In einer besonderen Ausgestaltung der Erfindung weist die Verschlußvorrichtung im Inneren des Stopfens nur eine einzige Gaszuleitung auf. Daher ist für die Austrittsöffnungen im Inneren keine besondere Geometrie erforderlich. In diesem Falle wird das Gas nicht erst im Innenraum des Hohlkörpers gemischt, sondern bereits zuvor, wodurch eine völlige Durchmischung sichergestellt wird.

Dabei werden ein brennbares Gas und ein oxidierendes Gas, ggf. mit einem verdünnenden Gas, gleichzeitig in den verschlossenen Hohlkörper ein- und dann zur Explosion gebracht. Die Gase können hierfür in einem außerhalb des Hohlkörpers befindlichen Raum in solchen Anteilen miteinander vermischt werden, daß eine explosionsfähige Mischung entsteht, die dann in einer vorgegebenen Menge in den verschlossenen Hohlkörper gelangt. Die Gase können z.B. in einem Zylinder vermischt und anschließend mit hoher Geschwindigkeit unter Druck in den Hohlkörper eingebracht werden, wobei der Druck durch die Einwirkung eines Kolbenschubs auf den Gasraum im Zylinder erzeugt wird. Die Durchmischung des Gases ist vollständig, so daß die Explosion gleichmäßig und mit höchstem Wirkungsgrad erfolgen kann.

Statt gemeinsam können die Gase auch gleichzeitig durch getrennte Leitungen oder durch eine gemeinsame Leitung aus separaten Zylindern - nacheinander - mit hoher Geschwindigkeit unter Druck in den Hohlkörper eingebracht werden, wobei der Druck durch die Einwirkung eines Kolbenschubs auf den Gasraum der Zylinder erzeugt wird. Der gewünschte Prozeßdruck und das Verhältnis der Gasmengen zueinander kann dabei durch separat regelbare Zylinder bewirkt werden.

Als brennbares Gas wird man häufig Methan und als oxidierendes Gas Luftsauerstoff verwenden.

In einer weiteren Ausgestaltung der Erfindung wird die Druckwelle nicht durch Zündung innerhalb des Hohlkörpers bewirkt, sondern bereits außerhalb. Durch die Zuführungsleitung wird in diesem Falle Gas schockartig in den Behälter eingepreßt. Auch für einen solchen Fall ist die erfindungsgemäße Vorrichtung günstig.

Die Figuren erläutern beispielhaft Ausgestaltungen der Erfindung.

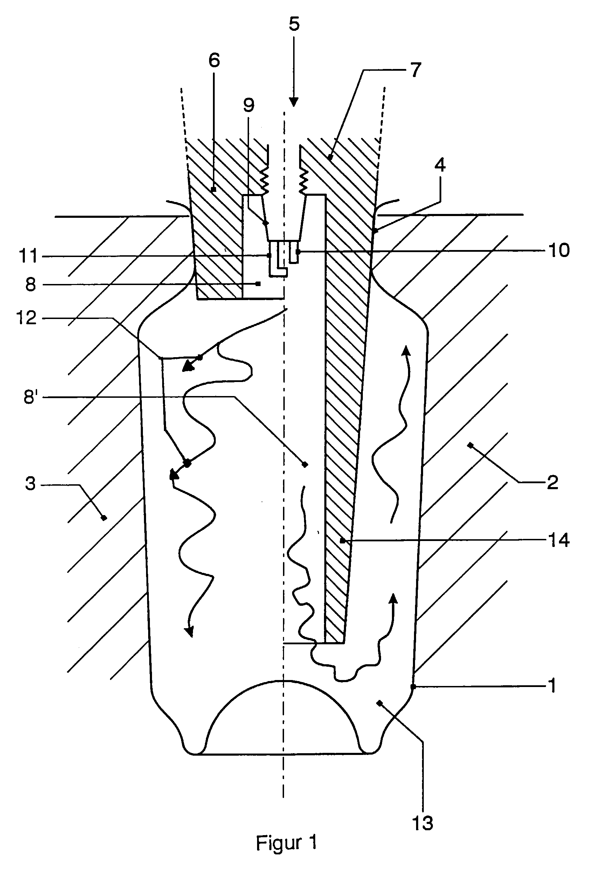

Nachstehend soll der erfindungsgemäße Stopfen mit ringförmiger Verlängerung anhand der **Figur 1** beispielhaft erläutert werden. Dabei ist ein Hohlkörper 1 in eine Form 2, 3 eingeschlossen. Der nach innen eingezogenen Halsbereich 4 des Hohlkörpers wird durch einen Stopfen 5 verschlossen. Die Schnittzeichnung zeigt nun zwei verschiedene Varianten der ringförmigen Verlängerung dieses Stopfens: auf der linken Seite 6 ist eine nur kurze ringförmige Verlängerung gezeigt (nicht erfindungsgemäß), während die rechte Seite 7 eine bis auf etwa 2 cm über den Boden des Hohlkörpers reichende Verlängerung 14 (eine sogenannte Lanze) zeigt. In beiden Fällen ist die Außenfläche des Stopfens nach unten konisch verjüngt. Die ringförmige Ausgestaltung des Stopfens beginnt bereits im Halsbereich. Dadurch entsteht ein innerer Hohlraum 8, 8', der in der Figur eine zylindrische Form besitzt. In diesen Hohlraum hinein ragt eine Zündeinrichtung 9 mit einer Zündkerze 10 und einer (einzigen) Gaszuführungsleitung 11. Durch Pfeile ist die Explosionswelle bei Zündung angedeutet: im linken Teil der Figur durch den Pfeil 12 angedeutet, weitet sich die Welle in Richtung der Wandung des Hohlkörpers aus und trifft sofort auf dieser auf. Im rechten Teil der Figur läßt sich erkennen, daß die Druckwelle den zylindrischen Raum 8' hinab, im Bereich 13 nach außen zur Wandung und zum Boden hin und dann an der Seitenwand entlang wieder nach oben wandert.

Die beigefügte **Figur 2** zeigt schematisch einen anderen Stopfen der erfindungsgemäßen Verschlußvorrichtung, jedoch ohne ringförmige Verlängerung. Die Figur ist nicht maßstäblich. Sie zeigt die Wände 1 eines Dosenkörpers, die von Formteilen 2, 3 umgeben sind. Der Hals 4 ist gegenüber dem Innenraum verengt und leicht gebogen. Der nach außen gebogenen Bereich ist ausweislich der Angabe über dem Pfeil 15 in diesem Beispiel etwa 4 mm lang.

Ein Stopfen 5 sitzt dichtend in der vom oberen Rand 4 gebildeten Öffnung. Er besitzt eine konische Form, deren Neigung wie die Seitenwandung 7 des Behälterhalses in diesem Beispiel einen Winkel von 4,5° gegenüber der Senkrechten aufweisen soll, (als Winkel zwischen den beiden Pfeilen 16,16' angedeutet). Mit 8 ist schematisch eine Gaszufuhr bezeichnet, die durch den Stopfen hindurchreicht. Details dieser Gaszufuhr sowie einer ggf. vorhandenen Zündeinrichtung sind in dieser Figur nicht gezeigt.

Ein solcher konischer Stopfen besitzt eine einfache Form und ist keinem Verschleiß ausgesetzt. Der Verschließvorgang ist einfach, da entweder der Stopfen auf den Hals des Hohlkörpers abgesenkt oder der Hohlkörper-Hals auf den Stopfen gefahren wird. Sofort nach kraftschlüssigem Verschließen der Formteile 2, 3 mit der Verschlußvorrichtung kann der Verformungsvorgang eingeleitet werden. Dieser Vorteil ist unabhängig vom Vorhandensein oder Fehlen der ringförmigen Verlängerung, wie sie z.B. in Figur 1 gezeigt ist.

## Patentansprüche

1. Verschlußvorrichtung für eine Einrichtung zum Formen von Hohlkörpern durch Verformen der Seitenwände und/oder des Bodens mittels sprunghaften Druckanstieges im Innenraum des Hohlkörpers, umfassend einen mit mindestens einer Gas-Zuführungsleitung und ggf. einer Zündeinrichtung versehenen Stopfen (5) zum dichtenden Verschließen des Innenraums des Hohlkörpers während des Formvorgangs, dessen zum Innenraum des Hohlkörpers gewandte Seite eine ringförmige Verlängerung (14) aufweist, die mindestens so weit in diesen hineinragt, daß ein bedeutender Teil der Wandung des Hohlkörpers vom Explosionsort abgeschirmt ist.

2. Verschlußvorrichtung nach Anspruch 1, worin die ringförmige Verlängerung sich über mehr als die halbe Länge des Hohlkörpers erstreckt.

3. Verschlußvorrichtung nach Anspruch 1 oder 2, worin der Stopfen im Dichtungsbereich eine konische Form mit einem Neigungswinkel im Bereich von 3° bis 6°, besonders bevorzugt von 4,5° bis 5° gegenüber der Senkrechten aufweist.

4. Verschlußvorrichtung nach Anspruch 3, worin die Außenfläche des Stopfens über ihre gesamte Länge denselben Neigungswinkel gegenüber der Senkrechten aufweist.

5. Verschlußvorrichtung nach einem der Ansprüche 1 bis 4, worin die in den Innenraum des Hohlkörpers ragenden Bereiche des Stopfens durchgehend oder mit Ausnahme des dem Hals des Hohlkörpers zugewandten Bereichs eine zylindrische Außenfläche aufweisen.

6. Verschlußvorrichtung nach einem der voranstehenden Ansprüche, worin der Stopfen teilweise oder ganz aus Metall gebildet ist.

7. Verschlußvorrichtung für eine Einrichtung zum Formen von Hohlkörpern durch Verformen der Seitenwände und/oder des Bodens mittels sprunghaften Druckanstieges im Innenraum des Hohlkörpers, umfassend einen mit mindestens einer Zuführungsleitung und ggf. einer Zündeinrichtung versehenen Stopfen (5) zum dichtenden Verschließen des Innenraums (9) des Hohlkörpers während des Formvorgangs, der mindestens im Dichtbereich eine konische Form mit einem Neigungswinkel gegenüber der Senkrechten im Bereich von 2° bis 10°, bevorzugt 3° bis 6°, ganz besonders bevorzugt 4,5° bis 5° aufweist.
